Europäisches Patentamt

**European Patent Office**

**Office européen des brevets**

(11) Numéro de publication: **0 336 852**
**A1**

# DEMANDE DE BREVET EUROPEEN

(21) Numéro de dépôt: **89400966.1**

(22) Date de dépôt: **07.04.89**

(51) Int. Cl.⁴: **B 64 D 11/06**
**B 60 N 1/06**

(30) Priorité: **08.04.88 FR 8804670**

(43) Date de publication de la demande:
**11.10.89 Bulletin 89/41**

(84) Etats contractants désignés: **DE FR GB IT**

(71) Demandeur: **SOCIETE INDUSTRIELLE ET COMMERCIALE DE MATERIEL AERONAUTIQUE (SICMA) SOCIETE ANONYME**
**7, rue Lucien Coupet**
**F-36100 Issoudun (FR)**

(72) Inventeur: **Marechal, Robert René**
**98, avenue Raymond Poincaré**
**F-75116 Paris (FR)**

(74) Mandataire: **Derambure, Christian et al**
**BUGNION ASSOCIES 55, rue Boissonade**
**F-75014 Paris (FR)**

(54) Structure de siège d'appareil de transport aérien en commun et siège comportant une telle structure.

(57) L'invention concerne une structure de siège d'appareil de transport aérien en commun -notamment d'avion de ligne-, et un siège comportant une telle structure. La structure selon l'invention est constituée d'un piètement (2), d'une assise (3), et d'un dossier inclinable (4) dont les ailes (7a, 7b) sont articulées à la partie arrière (9) par des moyens (10a, 10b) d'articulation de façon à pouvoir pivoter autour d'un axe (11a, 11b) horizontal transversal, et est caractérisée en ce que l'organe (12) de commande et de maintien en position du dossier (4) est relié respetivement aux deux ailes (7a, 7b) de la cornière en U (5) par des moyens (15, 16, 17, 18) de liaison mécanique, comportant notamment des bielles articulées (15, 16, 17), s'étendant intégralement à l'opposé de la cornière en U (5) par rapport à ses axes (11a, 11b) de pivotement de sorte que ces moyens (15, 16, 17, 18) de liaison mécanique sont intégrés dans l'assise (3) du siège.

FIG.1

EP 0 336 852 A1

Bundesdruckerei Berlin

Description

## STRUCTURE DE SIEGE D'APPAREIL DE TRANSPORT AERIEN EN COMMUN ET SIEGE COMPORTANT UNE TELLE STRUCTURE

L'invention concerne une structure de siège d'appareil de transport aérien en commun -notamment d'avion de lignes-constituée d'un piètement, d'une assise, et d'un dossier inclinable formé d'une cornière en forme générale de U dont l'âme forme le haut du dossier et les ailes forment les chants latéraux du dossier, chaque extrémité libre inférieure de la cornière étant articulée à la partie arrière de l'assise par des moyens d'articulation de façon à pouvoir pivoter autour d'un axe horizontal transversal, les deux axes de pivotement des deux extrémités libres de la cornière en U étant alignés, la structure comportant en outre un organe de commande et de maintien en position du dossier, cet organe étant associé rigidement à l'assise et coopérant via un mécanisme approprié avec la cornière en U pour permettre le réglage de la position du dossier et son maintien en position.

On connaît déjà de telles structures pour siège d'appareil de transport aérien en commun pour lesquels l'organe de commande et de maintien en position du dossier étant placé d'un côté de l'assise et jouxtant un des longerons de cette assise, est relié à l'une seulement des deux ailes de la cornière en forme générale de U formant le dossier du siège. Au contraire, en général, l'extrémité libre de l'autre aile formant la cornière est simplement articulée à l'axe de pivotement correspondant. L'organe de commande et de maintien en position est placé sous l'accoudoir du siège à partir duquel on peut agir sur des moyens de contrôle de cet organe.

Une telle disposition a essentiellement comme inconvénient d'engendrer une dissymétrie générale dans la structure du siège, et notamment dans la rigidité de la cornière en forme de U. En effet, l'aile reliée à l'organe de commande est maintenue de façon beaucoup plus ferme que l'autre aile de la cornière en forme de U. Or, lorsque le passager assis derrière le siège prend appui sur le dossier qui est devant lui pour se relever, la faiblesse de l'aile de la cornière en U non reliée à l'organe de commande et le défaut de symétrie dans la rigidité de cette cornière en forme de U peut engendrer une déformation indésirable du dossier. Pour remédier à cet inconvénient, plusieurs solutions ont déjà été envisagées.

La première solution connue consiste à placer deux organes de commande reliés respectivement à chacune des ailes de la cornière en U formant le dossier. Mais, une telle solution grève de façon rédhibitoire le poids général du siège qui est une caractéristique essentielle dans le domaine technique du transport aérien en commun. Par ailleurs, l'actionnement simultané des deux organes de commande pose des problèmes.

De la même façon, on connaît déjà (par exemple brevet anglais 1 504 200) une structure de siège comprenant un mécanisme à cames et engrènements de commande de l'inclinaison du siège de chaque côté du siège reliés dans leurs mouvements par un arbre transversal de sorte qu'ils peuvent être commandés par un seul organe commun placé d'un côté du siège. Néanmoins, l'arbre transversal ne participe pas à la rigidité du dossier. De plus, cette duplication de mécanismes à cames et engrènements est lourde, complexe et onéreuse, encombrante au niveau des genoux des passagers, et n'est pas transposable au cas où le verrouillage et le maintien sont assurés par un vérin hydraulique de commande et de maintien en position du dossier. Il est donc nécessaire de proposer une solution simplifiée qui de plus soit moins encombrante au niveau des genoux des passagers, afin d'optimiser le "knee-clearance". Enfin, le verrouillage assuré par des engrènements commandés par des mécanismes à cames n'est pas suffisamment résistant, n'est pas fiable et est sujet à une usure rapide.

Dans une deuxième solution connue, on rigidifie la structure formant le dossier grâce à des barres de liaison transversales reliant rigidement les deux ailes de la cornière en U. Mais de telles barres ont l'inconvénient de nuire au confort de la personne assise dans le siège, d'augmenter considérablement le poids du dossier, de limiter les possibilités envisageables pour les éléments de rembourrage du dossier, et surtout d'augmenter l'épaisseur du dossier. De plus, une telle barre transversale de rigidification doit être prévue le plus près possible des axes de pivotement de la cornière en forme de U par rapport à l'assise. Or, la position de ces axes de pivotement correspond en général sensiblement à la hauteur des genoux du passager assis à la place située derrière le siège. De ce fait, l'espace libre de confort laissé au niveau des genoux du passager de derrière, espace généralement dénommé "knee clearance" est limité, ou impose un écartement longitudinal des sièges les uns par rapport aux autres qu'il est souhaitable de pouvoir réduire.

Une autre solution équivalente à la précédente consiste à remplacer la ou les barres de rigidification par une structure en nid d'abeilles située en partie basse du dossier. Une telle structure a sensiblement les mêmes inconvénients que les barres de liaison, si ce n'est qu'elle gêne probablement moins le confort du passager assis dans le siège. Par contre elle augmente considérablement l'épaisseur du dossier et empêche la pose de certains éléments de rembourrage tels par exemple qu'une simple toile tendue.

L'invention vise à obvier les inconvénients précités des structures de l'art antérieur, et a pour objet d'augmenter la rigidité dans son plan du dossier sans engendrer pour autant de gêne pour le passager, notamment au niveau du dos et de l'espace libre pour les genoux, et sans augmenter le poids de la structure de façon rédhibitoire.

Plus particulièrement, l'invention a pour objet une structure pour siège d'appareil de transport aérien en commun qui permette, à écartement longitudinal constant des sièges les uns par rapport aux autres, d'augmenter l'espace libre au niveau des genoux ou "knee clearance" et dont le dossier a une rigidité supérieure à celle connue dans l'art antérieur. Plus précisément, l'invention vise à augmenter la rigidité de l'aile de la cornière en U formant le dossier non reliée à l'organe de commande et de maintien en position du dossier, et ce de façon à pouvoir satisfaire aux normes de plus en plus restrictives imposées par les administrations.

L'invention a également pour objet une telle structure sur laquelle il est possible d'installer n'importe quel type d'éléments de rembourrage, notamment une simple toile tendue.

Simultanément aux objets précédemment cités, l'invention a également pour objet de satisfaire les impératifs classiques dans le domaine technique du transport aérien en commun, à savoir un poids, un encombrement et un coût les plus faibles possible, avec une fiabilité et une longévité optimales.

Pour ce faire, l'invention propose une structure de siège d'appareil de transport aérien en commun telle que mentionnée précédemment, caractérisée en ce que l'organe de commande et de maintien en position du dossier est relié respectivement aux deux ailes de la cornière en U par des moyens de liaison mécanique comportant des bielles articulées et s'étendant intégralement au moins sensiblement à l'opposé de la cornière en U par rapport à ses axes de pivotement, de telle sorte que ces moyens de liaison mécaniques sont intégrés dans l'assise du siège. Une structure selon l'invention comporte un arbre de liaison horizontal transversal monté grâce à des paliers sur et entre deux longerons longitudinaux de l'assise, muni d'au moins deux biellettes solidaires en rotation de cet arbre et reliées respectivement à chacune des ailes de la cornière en U via des moyens à bielles s'étendant au moins sensiblement à l'opposé de la cornière en U par rapport aux axes de pivotement et qui, avec l'arbre de liaison, réalisent des moyens de liaison mécanique des deux ailes entre elles et à l'organe de commande qui imposent des mouvements similaires aux ailes lors des réglages de l'inclinaison du dossier et qui rigidifient la cornière en U formant ce dossier.

Dans une structure selon l'invention, un espace vide est ménagé entre les deux ailes de la cornière en U sur toute leur hauteur de sorte que le dossier ne comporte entre ses ailes et sur toute sa hauteur que des éléments assurant le confort ou la sécurité des passagers à l'exclusion de tout moyen de rigidification tels que des barres de liaison transversales ou des structure en nid d'abeilles.

D'autres caractéristiques et avantages de l'invention apparaîtront à la lecture de la description suivante d'un de ses modes de réalisation préférentiel représenté sur les figures annexées dans lesquelles :

- La figure 1 est une vue en perspective illustrant le dossier et une partie de l'assise et du piètement d'une structure selon l'invention.

- La figure 2 est une vue en perspective éclatée de détail de la structure représentée sur la figure 1, et illustrant plus particulièrement le mécanisme à bielles situé du côté de l'organe de commande.

- La figure 3 est une vue en perspective éclatée de détail de la structure selon l'invention représentée en figure 1, et illustrant plus particulièrement le mécanisme à bielles situé du côté latéral opposé à l'organe de commande.

- La figure 4 est un schéma en perspective illustrant la cinématique générale du dossier d'une structure selon l'invention.

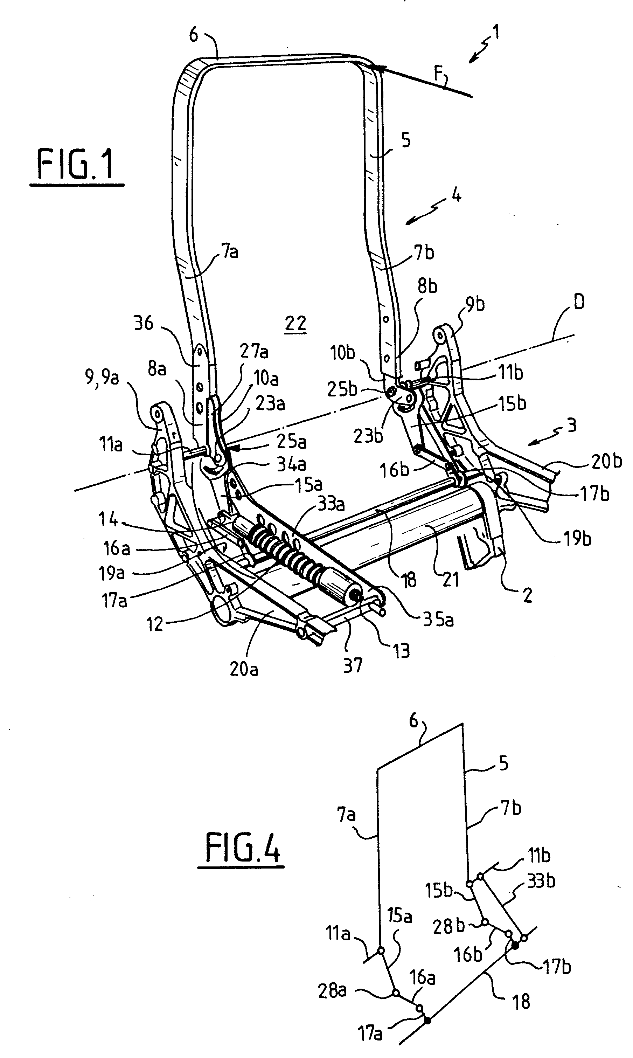

L'invention concerne une structure 1 de siège d'appareil de transport aérien en commun -notamment d'avion de lignes-constituée d'un piètement 2, d'une assise 3 et d'un dossier inclinable 4. Le dossier inclinable 4 est articulé sur l'assise 3. L'assise 3 et le dossier 4 comportent des éléments assurant le confort ou la sécurité du passager tels que éléments de rembourrage, coussins, mousse, toile, compartiments d'air comprimé, compartiments pour gilets de sauvetage ..., et forment ainsi le siège proprement dit sur lequel le passager peut s'asseoir. Le piètement 2 soutient l'assise et le dossier et permet de fixer le siège à l'appareil de transport aérien en commun. Sur la figure 1 le piètement et l'assise ne sont pas représentés intégralement, leurs parties constituantes non représentées étant connues de l'art antérieur. De même, les éléments assurant le confort ou la sécurité des passagers ne sont pas représentés sur les figures pour plus de clarté et sont largement connus de l'art antérieur. Dans toute la suite les termes "assise 3" et "dossier 4" font donc référence, sauf indication contraire, exclusivement aux éléments de la structure 1 formant le siège.

Le dossier inclinable 4 est essentiellement constitué d'une cornière 5 ou équivalent en forme générale de U dont l'âme 6 forme le haut du dossier 4 et les ailes 7a, 7b, forment les chants latéraux du dossier 4. En position normale du dossier 4, la cornière en U 5 s'étend au moins sensiblement verticalement, l'ouverture du U étant tournée vers le bas.

Dans toute la suite, et de façon conventionnelle, le terme "longitudinal" désigne la direction perpendiculaire au dossier 4, et le terme "transversal" désigne la direction horizontale parallèle à ce dossier 4.

Chaque extrémité libre 8a, 8b inférieure des ailes 7a, 7b de la cornière en U 5 est articulée à la partie arrière 9 de l'assise 3 par des moyens 10a, 10b d'articulation, de façon à pouvoir pivoter respectivement autour d'un axe 11a, 11b horizontal transversal. Les deux axes 11a, 11b de pivotement de ces deux extrémités libres 8a, 8b sont alignés selon une même direction horizontale transversale D. Les ailes 7a, 7b s'étendent sensiblement perpendiculairement à la direction D, parallèles et en regard l'une de l'autre, et d'un côté seulement de cette direction D.

La structure 1 comporte en outre un organe 12 de commande et de maintien en position du dossier inclinable 4. Cet organe 12 est un vérin hydraulique à ressort de rappel comme illustré sur la figure 1. Cet organe 12 sera désigné dans toute la suite par l'expression "organe 12 de commande". L'organe 12 de commande est associé rigidement à l'assise 3 par une 13 de ses extrémités qui forme le corps de cet organe 12. L'organe 12 coopère par son autre extrémité 14 qui comporte un point d'actionnement et via un mécanisme approprié, avec la cornière en U 5 pour permettre le réglage de la position du dossier 4 et son maintien en position. Des moyens de contrôle non représentés et connus en eux-mêmes permettent d'agir sur l'organe 12 de commande, notamment pour autoriser le déplacement de la tige d'actionnement du vérin qui compose cet organe 12.

Selon l'invention, l'organe 12 de commande et de maintien en position du dossier 4 est relié respectivement aux deux ailes 7a, 7b de la cornière en U 5 par des moyens 15, 16, 17, 18 de liaison mécanique qui comportent des bielles articulées 15, 16, 17. Ces moyens 15, 16, 17, 18 s'étendent globalement intégralement à l'opposé de la cornière en U 5 par rapport à ses axes 11a, 11b de pivotement, de telle sorte que ces moyens 15, 16, 17, 18 de liaison mécaniques sont intégrés dans l'assise 3 du siège. Selon l'invention, ces moyens 15, 16, 17, 18 s'étendent à partir de la direction D vers le bas et légèrement vers l'avant à l'intérieur de l'espace formé par l'assise 3.

Les moyens 15, 16, 17, 18 de liaison mécanique des ailes 7a, 7b d'une structure 1 selon l'invention comporte un arbre 18 de liaison horizontal transversal monté grâce à des paliers 19a, 19b sur et entre deux longerons longitudinaux 20a, 20b de l'assise 3. Ces deux longerons longitudinaux 20a, 20b forment les parties latérales de l'assise 3 et sont supportés par deux traverses 21 de l'assise 3. Sur la figure 1, seule la traverse arrière 21 est représentée et s'étend dans la direction transversale.

L'arbre 18 de liaison est muni d'au moins deux biellettes 17a, 17b solidaires en rotation de cet arbre 18 et reliées respectivement à chacune des ailes 7a, 7b de la cornière en U 5 via des moyens à bielles 15, 16 s'étendant à l'opposé de la cornière en U 5 par rapport aux axes 11a, 11b de pivotement et qui, avec l'arbre 18 de liaison, réalisent les moyens 15, 16, 17, 18 de liaison mécanique des deux ailes 7a, 7b entre elles et à l'organe 12 de commande. Ces moyens 15, 16, 17, 18 de liaison mécanique imposent des mouvements similaires aux ailes 7a, 7b lors des réglages de l'inclinaison du dossier 4 et rigidifient la cornière en U 5 formant ce dossier 4.

L'arbre 18 de liaison s'étend parallèlement à l'âme 6 de la cornière en U 5, mais au moins sensiblement à l'opposé de la direction D par rapport à cette âme 6. Il permet ainsi, à l'opposé de la direction D des axes 11a, 11b de pivotement, de fermer l'ouverture du U formé par la cornière 5, et dont les ailes 7a, 7b sont prolongées par les moyens à bielles 15, 16 et les biellettes 17a, 17b solidaires de l'arbre de liaison 18. On comprend donc que cet arbre de liaison 18, avec ses moyens à bielles 15, 16 et les biellettes 17a, 17b permet de rigidifier la cornière en U 5 dans son plan, bien qu'étant situé à l'opposé de la direction D par rapport à cette cornière 5. Ainsi, même si l'organe 12 de commande est situé sur un côté de l'assise 3 et coopère plus fermement avec l'une 7a des ailes de la cornière 5, il maintient l'autre aile 7b de cette cornière via l'arbre de liaison 18 et les moyens à bielles 15b, 16b et une biellette 17b. L'arbre 18 de liaison subit principalement des efforts de torsion importants et est donc dimensionné en conséquence. Il est par exemple constitué d'une tige d'acier.

Dans une structure selon l'invention, si on applique un effort dans la direction longitudinale F vers l'arrière à l'extrémité supérieure du dossier 4 et à l'opposé de l'organe 12 de commande, la cornière en U résistera mieux que dans l'art antérieur, et notamment subira un déplacement moindre. Par ailleurs, le déplacement engendré de la cornière en U s'effectuera avec un moindre gauchissement puisque les deux ailes 7a, 7b sont reliées entre elles dans leurs déplacements au niveau de leurs extrémités inférieures 8a, 8b par les moyens de liaison 15, 16, 17, 18.

Dans une structure selon l'invention, un espace vide 22 est ménagé entre les deux ailes 7a, 7b de la cornière en U 5 sur toute leur hauteur de sorte que le dossier 4 ne comporte entre ses ailes 7a, 7b et sur toute sa hauteur que des éléments assurant le confort ou la sécurité du passager à l'exclusion de tous moyens de rigidification tels que des barres de liaison transversales ou des structures en nid d'abeille. Ainsi, le confort du passager est grandement amélioré, l'épaisseur générale du dossier reste faible ainsi que son poids, et l'espace libre pour les genoux ou "knee clearance" est optimisé. Et cela simultanément avec une rigidité accrue dans son plan du dossier 4, notamment vis-à-vis du gauchissement.

Selon l'invention, l'arbre 18 de liaison s'étend à proximité immédiate de et parallèlement à une traverse arrière 21 de l'assise 3, notamment à l'arrière immédiat de cette traverse arrière 21. Par exemple, l'arbre 18 de liaison s'étend au moins sensiblement dans le plan horizontal ou sensiblement horizontal formé par les deux traverses 21 avant et arrière formant l'assise 3. Les moyens 15, 16, 17, 18 de liaison mécanique entre l'organe 12 de commande et les deux ailes 7a, 7b coopèrent avec des prolongements 23a, 23b solidaires des ailes 7a, 7b ou des moyens 10a, 10b d'articulation de ces ailes 7a, 7b aux axes 11a, 11b. Ces prolongements 23a, 23b s'étendent à partir de et perpendiculairement aux axes 11a, 11b de pivotement.

Les moyens 10a, 10b d'articulation de chaque extrémité libre 8a, 8b des ailes 7a, 7b de la cornière en U 5 sont constitués respectivement d'un renvoi d'angle 10a, 10b articulé par son sommet 24 à une extrémité 25a, 25b de l'axe 11a, 11b de pivotement respectif. Chaque axe 11a, 11b de pivotement est monté par son autre extrémité 26a, 26b sur un longeron 20a, 20b de l'assise 3. Plus précisément, la partie arrière 9 de chaque longeron 20a, 20b est recourbée vers le haut, et les axes de pivotement 11a, 11b sont associés rigidement au voisinage des extrémités libres supérieures arrières 9a, 9b des longerons 20a, 20b. Ces extrémités libres supérieures arrières 9a, 9b des longerons 20a, 20b supportent également en général les accoudoirs du siège non représentés. Un bras 27a, 27b de chaque renvoi d'angle 10a, 10b est associé rigidement à l'extrémité 8a, 8b de l'aile 7a, 7b correspondante. L'autre bras 23a, 23b du renvoi d'angle 10a, 10b constitue le prolongement 23a, 23b de connexion des moyens 15, 16, 17, 18 de liaison mécanique.

Selon l'invention, pour chacune des ailes 7a, 7b de la cornière en U 5, les moyens 15, 16, 17, 18 de liaison mécanique à bielles sont constitués d'une bielle principale 15a, 15b articulée à l'aile 7a, 7b, notamment au prolongement 23a, 23b de son extrémité libre 8a, 8b et d'une bielle secondaire 16a, 16b articulée à la bielle principale 15a, 15b par un axe 28a, 28b et à une biellette 17a, 17b solidaire de l'arbre 18 de liaison.

Selon l'invention, les moyens 10, 11 d'articulation et les moyens 15, 16, 17, 18 de liaison mécaniques à bielle sont similaires pour l'une et l'autre des deux ailes 7a, 7b de la cornière en U 5. Ainsi, les deux bielles principales 15a, 15b sont similaires, les deux bielles secondaires 16a, 16b sont similaires, les deux biellettes 17a, 17b solidaires de l'arbre 18 de liaison et connectées aux bielles secondaires 16a, 16b sont similaires. Ces moyens sont similaires en ce que leurs caractéristiques mécaniques et cinématiques (position des points d'articulation, longueur des bras de levier ...) sont les mêmes. Bien entendu, leurs formes extérieures et leur dimensionnement, notamment en épaisseur, peuvent varier d'une aile 7 à l'autre en fonction des spécificités de chacune des deux ailes 7a, 7b.

Selon l'invention, le point d'actionnement 14 de l'organe 12 de commande est associé articulé à l'axe d'articulation 28a de l'une 15a des deux bielles principales 15 avec la bielle secondaire 16a correspondante. Cet organe 12 de commande est associé par ailleurs rigidement au longeron 20a de l'assise 3 auquel la dite bielle principale 15a est articulée par l'axe 11a de pivotement correspondant, et cet organe 12 de commande s'étend sensiblement dans la direction longitudinale en jouxtant le dit longeron 20a vers l'intérieur de l'assise 3.

L'invention permet de placer éventuellement l'organe 12 de commande ailleurs que sur l'un des côtés de l'assise 3. Par exemple, l'organe 12 de commande peut être placé en partie centrale de l'assise 3, bien cela ne soit pas une solution habituellement retenue du fait que la partie centrale de l'assise 3 entre les deux traverses avant et arrière est réservée à titre de logement de sécurité, par exemple pour y placer le gilet de sauvetage. Cependant, lorsque cela s'avère avantageux, le point d'actionnement 14 de l'organe 12 de commande peut être associé à une biellette spécifique solidaire en rotation de l'arbre 18 de liaison dans sa partie médiane. L'organe 12 de commande est alors associé par son autre extrémité 13 rigidement en partie centrale de l'assise 3, notamment à l'une des traverses 21 de l'assise 3 ou à ses deux traverses.

Selon l'invention, chaque bielle principale 15a, 15b est articulée d'une part par son extrémité supérieure 29a, 29b à l'axe 11a, 11b de pivotement correspondant et d'autre part au prolongement 23a, 23b solidaire de l'extrémité libre 8a, 8b de l'aile 7a, 7b de la cornière en U 5 ou des moyens 10a, 10b d'articulation de cette extrémité libre 8a, 8b. Chaque bielle principale 15a, 15b est aussi articulée par son extrémité inférieure 30a, 30b à la bielle secondaire 16a, 16b correspondant par l'axe d'articulation 28a, 28b.

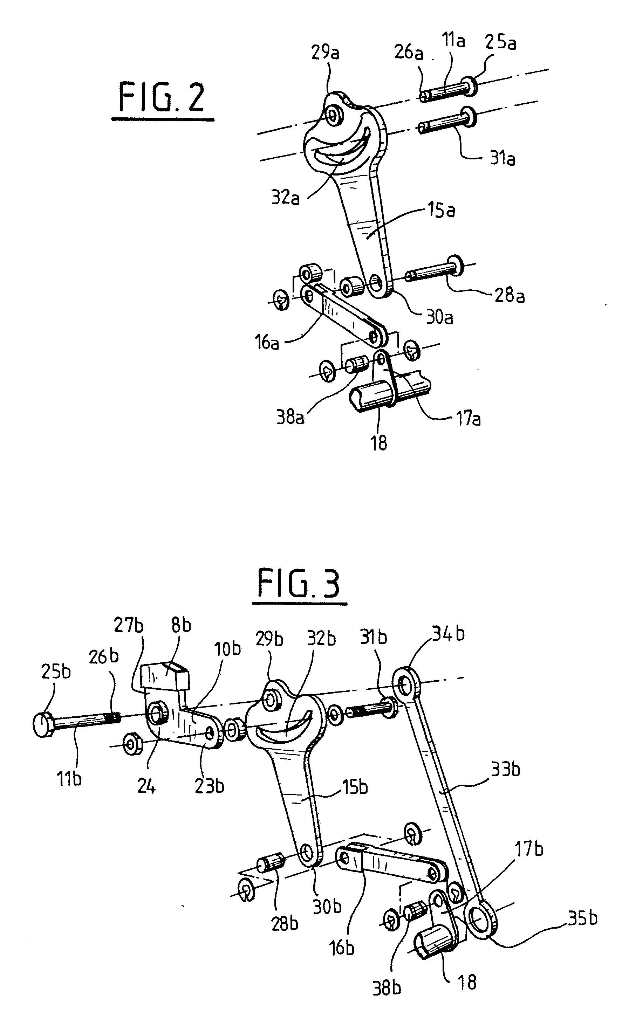

L'articulation de l'extrémité du prolongement 23a, 23b à une bielle principale 15a, 15b se fait avantageusement par l'intermédiaire d'un axe 31a, 31b transversal articulé sur la bielle principale 15a, 15b entre l'axe de pivotement 11a, 11b de l'aile 7a, 7b et l'axe d'articulation 28a, 28b de la bielle secondaire 16a, 16b. De préférence, cet axe 31a, 31b d'articulation du prolongement 23a, 23b sur la bielle principale 15a, 15b est inséré dans une lumière courbe 32a, 32b ménagée sur la bielle principale 15a, 15b (figures 2 et 3). Cette lumière 32a, 32b est de forme circulaire centrée sur l'axe de pivotement 11a, 11b et permet de rabattre le dossier 4 vers l'avant. Le mouvement de l'axe 31a, 31b dans la lumière 32a, 32b est freiné, par exemple par des rondelles de friction. La valeur de ce freinage est adaptée en fonction de la résistance du vérin pour que le rabat du dossier vers l'avant soit possible lorsque le vérin est bloqué, mais pour que l'axe 31a, 31b d'articulation ne se déplace pas dans la lumière 32a, 32b lorsque le vérin est débloqué et que l'on règle la position du dossier 4. Cette possibilité de rabat vers l'avant est dictée par des impératifs de sécurité et d'encombrement du siège lors de son stockage. En variante, la lumière 32 courbe peut être ménagée sur l'extrémité de l'aile 7a, 7b ou sur le prolongement 23a, 23b, l'axe 31 étant alors solidaire de la bielle principale 15.

Une structure 1 selon l'invention comporte pour au moins un axe 11a, 11b de pivotement d'une aile 7a, 7b de la cornière en U 5, une barre 33a, 33b de renfort associée par une de ses extrémités libres supérieures 34a, 34b à l'axe 11a, 11b de pivotement, notamment en un point de cet axe de pivotement situé au voisinage du point d'articulation de l'aile 7a, 7b sur ce même axe 11a, 11b par le renvoi d'angle 10a, 10b. Chaque barre 33a, 33b de renfort est articulée à l'axe 11a, 11b de pivotement. Une barre 33a de renfort est associée rigidement par son autre extrémité 35a au longeron 20a de l'assise 3 supportant l'axe 11a de pivotement correspondant. En variante une barre 33b de renfort peut aussi être est associée articulée par son autre extrémité 35b autour de l'arbre 18 de liaison.

Dans le mode de réalisation préférentiel représenté, on prévoit une barre de renfort 33a articulée vers l'intérieur à l'extrémité 25a de l'axe 11a de pivotement, s'étendant longitudinalement à côté de l'organe 12 de commande, et étant associée rigidement par son autre extrémité libre 35a au longeron 20a avec l'extrémité 13 de fixation de l'organe 12 de commande sur ce longeron 20a. Cette barre de renfort 33a permet de maintenir l'extrémité 25a de l'axe 11a en place et donc de maintenir cet axe 11a de pivotement aligné avec la direction D quels que soient les efforts de flexion subis par cet axe 11a de pivotement au niveau de son extrémité intérieure 25a.

Au contraire, pour l'autre axe 11b de pivotement, on prévoit une barre de renfort 33b articulée au voisinage de l'extrémité 25b de cet axe 11b par son extrémité libre supérieure 34b. De préférence, la barre 33b est articulée à l'axe 11b entre le renvoi d'angle 10b et le longeron 20b, mais le plus près possible du renvoi d'angle 10b et de l'extrémité libre intérieure 25b de l'axe 11b de pivotement. L'autre extrémité 35b inférieure de la barre de renfort 33b est quant à elle articulée directement sur l'arbre 18 de liaison.

Le renvoi d'angle 10a situé du côté de l'organe 12 de commande est avantageusement constitué de deux plaques similaires écartées l'une de l'autre et placées de part et d'autre de la bielle principale 15a pour constituer les moyens de freinage mentionnés ci-dessus de l'axe 31a d'articulation de ce renvoi d'angle 10a sur la bielle 15a principale. Les parties supérieures formant le bras 27a du renvoi d'angle 10a associé à l'extrémité libre 8a de l'aile 7a sont avantageusement associées entre elles et à cette extrémité libre 8a de l'aile 7a par l'intermédiaire d'un étrier 36. De l'autre côté, le renvoi d'angle 10b peut être simplement constitué d'une seule pièce et le bras 27b de ce renvoi d'angle est inséré à l'intérieur de l'extrémité libre inférieure 8b de l'aile 7b. En effet, la cornière en U 5 est avantageusement formée d'un tube aplati creux, par exemple en aluminium.

La structure formant le dossier 4 selon l'invention comporte donc successivement du côté de l'organe 12 de commande l'aile 7a, l'étrier 36, le renvoi d'angle 10a en deux pièces, l'axe de pivotement 11a, la bielle principale 15a, articulée en 14 à l'organe 12 de commande, la bielle secondaire 16a, et la biellette 17a solidaire au voisinage du palier 19a de l'arbre de liaison 18. La bielle secondaire 16a et la biellette 17a solidaire de l'arbre 18 sont articulées l'une à l'autre par un axe 38a. L'organe 12 de commande s'étend vers l'avant à partir de son point d'actionnement 14 articulé à l'axe 28a reliant la bielle principale 15a et la bielle secondaire 16b. L'extrémité avant libre 13 du corps de l'organe 12 de commande est associée rigidement au longeron 20a correspondant par un support 37 s'étendant transversalement vers l'intérieur à partir du longeron 20a. La barre de renfort 33a est articulée à l'extrémité 25a de l'axe 11a de pivotement par son extrémité libre extérieure 34a, et est associée rigidement au support 37 par son extrémité avant inférieure 35a. Le mouvement et les efforts sont transmis de l'autre côté du siège d'une part par l'arbre 18 de liaison en partie inférieure, et d'autre part en partie supérieure par l'âme 6 de la cornière en U 5. L'arbre 18 de liaison comporte une biellette 17b solidaire en rotation de cet arbre de liaison au voisinage du palier 19b d'articulation sur le longeron 20b à l'opposé de l'organe 12 de commande. La biellette 17b est articulée grâce à un axe 38b et par son extrémité à la bielle secondaire 16b qui est elle-même articulée par son autre extrémité à la bielle principale 15b par l'axe 28b. L'extrémité supérieure 29b de la bielle principale 15b est articulée à l'axe 11b de pivotement. A l'extrémité libre 25b de l'axe 11b est articulé le sommet 24 du renvoi d'angle 10b. L'extrémité du prolongement 23b de ce renvoi d'angle 10b est articulée dans la lumière 32b à la bielle principale 15b par l'axe d'articulation 31b. De ce côté, la barre de renfort 33b est articulée d'une part à l'arbre 18 de liaison en partie inférieure par son extrémité inférieure 35b et entre la biellette 17b et le palier 19b, et d'autre part par son extrémité libre supérieure 34b à l'axe 11b de pivotement entre la bielle principale 15b et le longeron 20b. L'axe 11b de pivotement comporte donc successivement de l'intérieur du siège vers l'extérieur, c'est-à-dire vers son point d'association 26b au longeron 20b, le renvoi d'angle 10b, la bielle principale 15b et la barre de renfort 33b.

La cinématique de l'ensemble de cette structure est illustrée à la figure 4. On voit que la barre 33b de renfort située à l'opposé de l'organe 12 de commande permet de maintenir à distance constante l'axe 11b de pivotement correspondant et l'arbre 18 de liaison. Cette caractéristique permet à la structure 1 selon l'invention de subir des contraintes beaucoup plus importantes du côté opposé à l'organe 12 de commande.

L'invention concerne également un siège d'appareil de transport en commun aérien, notamment un siège d'avion de ligne, caractérisé en ce qu'il comporte une structure 1 selon l'invention et des éléments de confort ou de sécurité tels que rembourrage, coussin, mousse, toile, compartiment pour air comprimé au gilet de sauvetage ...

## Revendications

1) Structure de siège d'appareil de transport aérien en commun -notamment d'avion de ligne- constituée d'un piètement (2), d'une assise (3), et d'un dossier inclinable (4) formé d'une cornière (5) en forme générale de U dont l'âme (6) forme le haut du dossier (4) et les ailes (7a, 7b) forment les chants latéraux du dossier (4), chaque extrémité libre inférieure (8a, 8b) des ailes (7a, 7b) de la cornière en U (5) étant articulée à la partie arrière (9) par des moyens (10a, 10b) d'articulation de façon à pouvoir pivoter autour d'un axe (11a, 11b) horizontal transversal, la structure (1) comportant en outre un organe (12) de commande et de maintien en position du dossier (4), cet organe (12) étant associé rigidement à l'assise (3) et coopérant via un mécanisme approprié avec la cornière en U (5) pour permettre le réglage de la position du dossier (4) et son maintien en position, caractérisée en ce que l'organe (12) de commande et de maintien en position du dossier (4) est relié respectivement aux deux ailes (7a, 7b) de la cornière en U (5) par des moyens (15, 16, 17, 18) de liaison mécanique, comportant des bielles articulées (15, 16, 17), s'étendant intégralement à l'opposé de la cornière en U (5) par rapport à ses axes (11a, 11b) de pivotement de sorte que ces moyens (15, 16, 17, 18) de liaison mécanique sont intégrés dans l'assise (3) du siège.

2) Structure selon la revendication 1, caractérisée en ce que les moyens (15, 16, 17, 18) de liaison mécanique des ailes (7a, 7b) comportent un arbre (18) de liaison horizontal transversal monté grâce à des paliers (19a, 19b) sur et entre deux longerons longitudinaux (20a, 20b) de l'assise (3), l'arbre (18) étant muni d'au moins deux biellettes (17a, 17b) solidaires en rotation de cet arbre (18) et reliées respectivement à chacune des ailes (7a, 7b) de la cornière en U (5) via des moyens à bielles (15, 16) s'étendant à l'opposé de la cornière en U (5) par rapport aux axes (11a, 11b) de pivotement, et qui, avec l'arbre (18) de liaison réalisent les moyens (15, 16, 17, 18) de liaison mécanique des deux ailes (7a, 7b) entre elles et à l'organe (12) de commande qui imposent des mouvements similaires aux ailes (7a, 7b) lors des réglages de l'inclinaison du dossier (4) et qui rigidifient la cornière en U (5) formant ce dossier (4).

3) Structure selon l'une quelconque des revendications 1 et 2, caractérisée en ce qu'un espace vide (22) est ménagé entre les deux ailes (7a, 7b) de la cornière en U (5) sur toute leur hauteur de sorte que le dossier (4) ne comporte entre ces ailes (7a, 7b) et sur toute sa hauteur que des éléments assurant le confort ou la sécurité du passager à l'exclusion de tous moyens de rigification tels que des barres de liaison transversale ou des structures en nid d'abeille.

4) Structure selon l'une quelconque des revendications 2 et 3, caractérisée en ce que l'arbre (18) de liaison s'étend à proximité immédiate de et parallèlement à une traverse arrière (21) de l'assise (3), notamment à l'arrière de cette traverse arrière (21).

5) Structure selon l'une quelconque des revendications 2 à 4, caractérisée en ce que l'arbre (18) de liaison s'étend au moins sensiblement dans le plan des deux traverses (21) avant et arrière formant l'assise (3).

6) Structure selon l'une quelconque des revendications 1 à 5, caractérisée en ce que les moyens (15, 16, 17, 18) de liaison mécanique entre l'organe (12) de commande et les deux ailes (7a, 7b) coopèrent avec des prolongements (23a, 23b) des ailes (7a, 7b) s'étendant à partir des axes (11a, 11b) de pivotement.

7) Structure selon l'une quelconque des revendications 1 à 6, caractérisée en ce que les moyens (10) d'articulation de chaque extrémité libre (8a, 8b) des ailes (7a, 7b) de la cornière en U (5) sont constitués d'un renvoi d'angle (10a, 10b) articulé par son sommet (24) à une extrémité (25a, 25b) de l'axe (11a, 11b) de pivotement respectif qui est monté pivotant par son autre extrémité (26a, 26b) sur un longeron (20a, 20b) de l'assise (3), un bras (27a, 27b) du renvoi d'angle (10a, 10b) étant associé rigidement à l'extrémité (8a, 8b) de l'aile (7a, 7b) tandis que l'autre bras (23a, 23b) du renvoi d'angle (10a, 10b) constitue un prolongement (23a, 23b) de connexion des moyens (15, 16, 17, 18) de liaison mécanique.

8) Structure selon l'une quelconque des revendications 1 à 7, caractérisée en ce que pour chacune des ailes (7a, 7b) de la cornière en U (5), les moyens (15, 16, 17, 18) de liaison mécanique à bielles sont constitués d'une bielle principale (15a, 15b) articulée à l'aile (7a, 7b), notamment au prolongement (23a, 23b) de son extrémité libre (8a, 8b), et d'une bielle secondaire (16a, 16b) articulée à la bielle principale (15a, 15b) et à une biellette (17a, 17b) solidaire de l'arbre (18) de liaison, les deux bielles principales (15a, 15b) étant similaires, les deux bielles secondaires (16a, 16b) étant similaires, et les deux biellettes (17a, 17b) solidaires de l'arbre (18) de liaison étant similaires.

9) Structure selon la revendication 8, caractérisée en ce que le point d'actionnement (14) de l'organe (12) de commande est associé articulé à l'axe d'articulation (28a) de l'une (15a) des deux bielles principales (15) avec la bielle secondaire (16a) correspondante et en ce que l'organe (12) de commande est associé rigidement au longeron (20a) de l'assise (3) auquel la dite bielle principale (15a) est articulée par l'axe (11a) de pivotement, l'organe (12) de commande s'étendant sensiblement dans la direction longitudinale et jouxtant le dit longeron (20a) vers l'intérieur de l'assise (3).

10) Structure selon l'une quelconque des revendications 2 à 8, caractérisée en ce que le point d'actionnement (14) de l'organe (12) de commande est associé à une biellette spécifique solidaire en rotation de l'arbre (18) de liaison et en ce que l'organe (12) de commande est associé rigidement en partie centrale de l'assise (3), notamment à l'une des traverses (21) de l'assise (3).

11) Structure selon l'une quelconque des revendications 8 à 10, caractérisée en ce que chaque bielle principale (15a, 15b) est articulée d'une part par son extrémité supérieure (29a, 29b) à l'axe (11a, 11b) de pivotement et d'autre part au prolongement (23a, 23b) de l'extrémité libre (8a, 8b) de l'aile (7a, 7b) de la cornière en U (5).

12) Structure selon l'une quelconque des revendications 1 à 11, caractérisée en ce qu'elle comporte, pour au moins un axe (11a, 11b) de pivotement d'une aile (7a, 7b), une barre (33a, 33b) de renfort associée par une de ses extrémités libres (34a, 34b) à l'axe (11a, 11b) de pivotement, notamment au voisinnage du point d'articulation de l'aile (7a, 7b).

13) Structure selon la revendication 12, caractérisée en ce que la barre (33a, 33b) de renfort est articulée à l'axe (11a, 11b) de pivotement.

14) Structure selon l'une quelconque des revendications 12 et 13, caractérisée en ce que la barre (33a, 33b) de renfort est associée rigidement par son autre extrémité (35a, 35b) au longeron (20a, 20b) de l'assise (3) supportant l'axe (11a, 11b) de pivotement.

15) Structure selon l'une quelconque des revendications 12 et 13, caractérisée en ce que la barre (33a, 33b) de renfort est associée articulée par son autre extrémité (35a, 35b) autour de l'arbre (18) de liaison.

16) Structure selon l'une quelconque des revendications 1 à 15, caractérisée en ce que l'organe (12) de commande est un vérin hydraulique à ressort de rappel.

17) Siège d'appareil de transport en commun aérien, caractérisé en ce qu'il comporte une structure (1) selon l'une quelconque des revendications 1 à 16 et des éléments de confort ou de sécurité.

FIG.1

FIG.4

## FIG. 2

## FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | GB-A-1 504 200  (CHAPMAN LTD)<br>* Page 3, lignes 39-64,109-118 *<br>--- | 1 | B 64 D  11/06<br>B 60 N   1/06 |
| A | GB-A-2 154 870  (DAIMLER-BENZ AG)<br>* Page 1, lignes 100-127 *<br>----- | 1 | |

DOMAINES TECHNIQUES
RECHERCHES (Int. Cl.4)

B 64 D
B 60 N

Le présent rapport a été établi pour toutes les revendications

| Lieu de la recherche | Date d'achèvement de la recherche | Examinateur |
|---|---|---|
| LA HAYE | 06-07-1989 | HAUGLUSTAINE H.P.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)